# EUROPEAN PATENT SPECIFICATION

(11) **EP 1 490 193 B1**
(45) Date of publication and mention of the grant of the patent: **17.06.2009**
(21) Application number: 03745054.1
(22) Date of filing: 20.03.2003
(51) Int. Cl.: B23B 45/00, B23C 1/20

(54) **ORBITAL HAND TOOL APPARATUS FOR DRILLING**
HANDWERKZEUG ZUM BOHREN AUF KREISFÖRMIGER BAHN
APPAREIL ORBITAL PORTATIF A PERCER

(30) Priority: 21.03.2002 US 103623
(43) Date of publication of application: 29.12.2004
(73) Proprietor: Novator AB, 163 55 Spaanga (SE)
(72) Inventor: BJÖRK, Erik, S-163 51 Spånga (SE); STUXBERG, Mats, S-192 74 Sollentuna (SE); WIKLUND, Marcus, S-162 67 Vällingby (SE)
(74) Representative: Börlin, Maria
(86) International application number: PCT/SE2003/000467
(87) International publication number: WO 2003/080277

(56) References cited:
- WO-A1-94/17944
- WO-A1-03/008136
- WO-A2-01/15870
- US-A- 4 557 338
- US-A- 4 934 040
- US-A- 5 971 678

## Description

### BACKGROUND OF THE INVENTION

### 1. Field of the invention.

The present invention relates to a hand tool for cutting a hole in an object, and, more particularly, a hand tool apparatus for cutting a hole that has a larger diameter than the diameter of the cutting tool.

### 2. Description of the related art.

U.S. Patent No. 5 641 252 discloses a method for machining holes in a fiber reinforced composite material by using at least one cutting tool with wear resistant surface positioned eccentrically in relation to a central axis. The material is machined simultaneously in both an axial and a radial direction by causing the tool to move axially while rotating not only about its own axis, but also eccentrically about the central axis. In accordance with one particular characterizing feature of the invention, the workpiece is oriented in such a way that the axis of rotation of the tool is essentially orthogonal in relation to the longitudinal directions of the fibers in the immediate vicinity of the point where the tool meets the working surface. The diameter of the cutting tool is substantially smaller than the diameter of the hole that is produced. The eccentric rotary motion is generally a strictly rotary motion, i.e. it is executed with a constant distance between the central axis and the axis of rotation of the cutting tool. This distance between the central axis and the axis of rotation of the cutting tool can be increased by linear increments as the eccentric rotary motion continues.

This known method has a number of substantial advantages as compared with generally familiar techniques. For example, the method permits the production of holes without strength reducing damage. Also, the method permits the production of holes free from damage without having to preform a hole. Further, the method permits the production of holes to tight tolerances. The dimensional accuracy of the hole is determined substantially by the accuracy of the positioning of the tool relative to the central axis. The requirements imposed on the geometry of the cutting tool are not particularly high, on the other hand, since every individual tool is simply calibrated before use. Additionally, the method prevents the tool from becoming blocked. Since the diameter of the tool is substantially smaller than that of the hole, the method permits material removed by cutting to be carried away by simple means, such as with compressed air. The method also permits effective cooling of the tool and the edge of the hole. Yet another advantage is that the method substantially reduces the cost of wear compared to previously disclosed methods, due to the tool being coated with a wear resistant material, such as diamond coating. Moreover, this method also offers advantages when machining other materials such as metals.

U.S. Patent No. 5 971 678 discloses a spindle unit that includes a spindle motor that is rotatable about a principal axis. The spindle motor includes a tool holder having a tool axis substantially parallel to the principal axis. The tool holder is rotatable about the tool axis. An axial actuator is configured for moving the spindle motor in an axial feed direction substantially parallel to each of the principal axis and the tool axis. A radial actuator adjusts a radial distance between the principal axis and the tool axis. This spindle unit can be mounted in a stationary machine such as a CNC machine, robot or a simple rig.

PCT application PCT/SE94/00085 discloses a hand tool machine for machining holes according to the above-described technique. This disclosure relates to a hand machine for making holes in an object made of composite fibers, preferably with a curved surface. The center axis of the hole passes through a predetermined point on the surface of the object and is oriented in a certain direction relative to the longitudinal direction of the fibers of the object which are close to the point. The machine includes, in combination, a tool holder rotating about its own axis and a principal axis, a device for adjusting the axis of rotation of the tool holder in the normal direction of the surface at the point, a device for axial feeding of the tool holder relative to the object, a device for adjusting the radial distance (offset) between the principal axis and the axis of rotation of the tool holder, and a device for taking up the forces and moments between the machine and the object that result from the making of the holes.

Although this aforementioned disclosure outlines some principles, the disclosed hand tool does not offer a feasible and practical solution. One obvious limitation is that the disclosed concepts do not present a solution for the power supply and therefore their potential for realization must be questioned. One basic requirement for a hand tool is light-weight and user friendliness. The disclosed concepts do not provide a compact integrated light-weight design. Furthermore, the illustrated concepts show solutions which require a very long tool overhang, which is a severe limitation due to the radial cutting force, which creates a bending moment on the cutting tool.

When machining holes according to the proposed method, i.e., by positioning the tool eccentrically in relation to a central axis and machining simultaneously in both an axial and radial direction by causing the tool to move axially and to rotate not only about its own axis, but also eccentrically about a central axis, the tip of the tool is subjected to both an axial force and a radial force. The radial force creates bending moment on the tool, the magnitude of which is dependent on both the magnitude of the force and on the length of the tool overhang (moment arm). It is desirable to minimize the bending moment for optimal machining accuracy. This can be achieved by minimizing the tool overhang, i.e., the free length of the tool. The concepts illustrated in PCT/SE94/00085 show situations where the tool overhang is determined by the thickness of the hole template and by the thickness of the workpiece. Since the thickness of the template may be substantial, the tool overhang may be accordingly substantial.

U.S. Patent No. 6 382 890 B1 discloses a hand tool apparatus for orbital drilling of holes in an object and uses a cutting tool with a first width and a tool axis. The hole to be formed has a second width which is larger than the first width of the cutting tool.

The apparatus includes an actuating assembly having a housing that contains an axial feed mechanism in the form of two air chambers on opposite sides of a piston portion of an outer sleeve of a spindle unit, for moving the cutting tool in an axial direction, a spindle motor configured for rotating the cutting tool about the tool axis, and a radial offset mechanism which is configured for moving the axial feed mechanism in a radial direction such that the tool axis is offset from a principal axis. A stationary motor is configured for rotating the axial feed mechanism and the cutting tool about the principal axis.

### SUMMARY OF THE INVENTION

The present invention provides a rotary hand tool apparatus using a cutting tool to machine a hole in an object such that the hole has a width that is larger than the width of the cutting tool. Moreover, the present invention provides a compact and lightweight hand tool apparatus for machining holes in a flat or curved object of any material by rotating a cutting tool about its own axis and about a principal axis while simultaneously feeding in the axial direction. A lightweight and compact apparatus is achieved by integrating a radial offset mechanism, a spindle unit and an orbital drive in a common assembly, which is axially displaced along the principal axis (hole axis) and is jointly advanced and withdrawn by a stationary axial feed mechanism.

The invention comprises, in one form thereof, a hand tool apparatus for using a cutting tool with a first width and a tool axis to machine a hole in an object, the hole to be formed by the cutting tool having a second width which is larger than the first width of the cutting tool, said apparatus comprising:
a housing;
a carrier mounted to and axially moveable relative to the housing;
a spindle unit having a principal axis and including a spindle motor, a spindle shaft for rotating the cutting tool, and a radial offset mechanism configured for adjusting a radial offset of the cutting tool axis relative to the principal axis, said spindle unit being secured to said carrier against axial movement while being rotational relative to said carrier about said principal axis;
an orbital drive motor mounted on said carrier and drivingly connected to said spindle unit for rotating said spindle unit about said principal axis relative to said carrier; and
an axial feed mechanism secured to said housing and said carrier and configured for jointly advancing and withdrawing said spindle unit together with said carrier and said orbital drive motor relative to the object.

An advantage of the present invention is that the hand tool is more lightweight and compact than the previous devices.

Another advantage is that the tool overhang is minimized, thereby reducing the bending moment on the cutting tool.

Still another advantage is that side-by side positional relationships are present between major components, reducing overall tool length and deflection between components.

A still further advantage is that the drive connections between the spindle unit and the cutting tool, and between the orbital drive and the spindle unit are substantially fixed, with the combined assembly advanced and retracted by the axial feed mechanism, thereby stabilizing the drive relationships for any position of the cutting through out the linear path traveled by the cutting tool.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a side sectional view of one embodiment of a pneumatic portable orbital drill of the present invention;
Fig. 2 is a perspective view of the portable orbital drill shown in Fig. 1 in a retracted position of a spindle unit;
Fig. 3 is an elevational view of the portable orbital drill in Fig. 1 and 2 shown in the retracted position of the spindle unit; and
Fig. 4 is an elevational view similar to Fig. 3, but in an advanced position of the spindle unit.

### DETAILED DESCRIPTION OF THE INVENTION

Referring now to the drawings, there is shown a hand tool apparatus in the form of a pneumatic portable orbital drill 10. The drill 10 includes a spindle unit 20 and an eccentric rotation mechanism 22 in the nature of an orbital drive unit 24 secured in a frame or housing 26 of the drill 10. The housing 26 includes a bottom plate 28 and a top 30 interconnected by a wall member 18. The spindle unit 20 includes a spindle motor 32 and a radial offset mechanism 34.

The radial offset mechanism 34 basically comprises, in a manner known per se, an inner sleeve 36 rotatably supporting the spindle unit 20 therein. The spindle motor 32 is rotatably supported in an eccentric cylindrical hole in the inner sleeve 36. The eccentric hole has a longitudinal center axis that is parallel to but radially offset from the longitudinal center axis of the sleeve 36. The eccentric inner sleeve 36 is, in its turn, rotatably supported within an axially extending eccentric hole of an outer sleeve 38. The latter eccentric hole has a longitudinal center axis that is parallel to but radially offset from the center axis of the sleeve 36 (the principal axis). Preferably, the holes of the sleeves 36 and 38 have the same eccentricity, i.e. the hole center axes are radially offset the same distance from the respective center axis of the sleeves 36 and 38. By rotating the inner sleeve 36 within the eccentric hole of the outer sleeve 38, or by a mutual, relative rotation of the sleeves 36 and 38, it is thus possible to locate the center axis of the eccentric hole of the inner sleeve 36 such that it, and hence the spindle unit 20 and the center axis of the cutting tool (not shown) fixed thereto, will coincide with the center axis of the outer sleeve 38. In this case there is no radial offset at all of the cutting tool axis. By performing a mutual, relative rotation of 180° of the inner and outer sleeves 36 and 38 away from this zero radial offset position, a maximum offset of the cutting tool axis is obtained. The adjustment of the radial offset of the cutting tool axis relative to the principal axis (the axis of the hole to be formed) may be achieved by rotating a set screw 40 located tangentially between the inner and outer sleeves. A locking ring 42, an axial nut 44 and a zero point ring 46 are provided at a front end 48 of the spindle unit 20, and a motor cover 50 is provided at a back end 52 of the spindle unit 20 and is secured to the inner sleeve 36.

A spindle shaft 54 is operatively connected to and driven by the spindle motor 32 through a clutch coupling 56. The spindle shaft 54 is mounted in the inner sleeve 36 by needle bearings 58 and spindle bearings 60. A tool holder (not shown) for holding a cutting tool (not shown) is mounted to the spindle shaft 54.

The spindle unit 20 is mounted in the housing 26 by a bushing 62 between the outer sleeve 38 and the bottom plate 28, and by a bushing 64 between the outer sleeve 38 and top 30. A forward guide 66 extending forwardly from bottom plate 28 provides added stability and positioning for spindle unit 20 relative to bottom plate 28. The spindle unit 20 is further mounted to a carrier 68 by bearings 70 and 72. The carrier 68 is axially adjustable in the housing 26, as will be described subsequently.

The orbital drive unit 24 includes a motor 74 secured in a motor bracket 76 on the carrier 68. A pulley 78 is mounted on a shaft 80 of the motor 74. A drive belt 82 establishes a driving connection between pulley 78 and the outer sleeve 38, through a pulley surface 84 formed integrally on outer sleeve 38. The orbit motor 74 thereby rotates spindle unit 20, with carrier 68 held rotationally stationary, together with the housing 26.

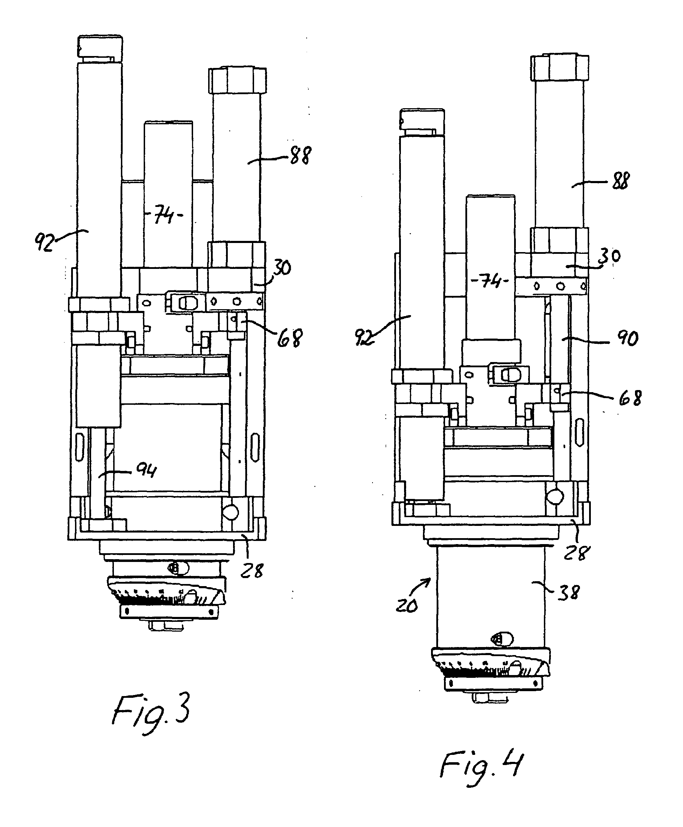

An axial feed mechanism 86 operates on the spindle unit 20 and the orbital drive unit 24 to adjust the axial positions thereof in the housing 26 between a fully advanced position (Fig. 4) and a fully retracted position (Fig. 3), as will be described hereinafter. The axial feed mechanism 86 establishes an axially adjustable interconnection between housing 26 and carrier 68, and thereby the components carried by carrier 68, including the spindle unit 20 and the orbital drive unit 24. The axial feed mechanism 86 comprises an axial adjustment cylinder 88 mounted on the top 30 of housing 26 and including a cylinder rod 90 connected to the carrier 68. The axial adjustment cylinder 88 is preferably a double acting pneumatic cylinder effecting axial movement of the carrier 68 both forwardly and backwardly. An hydraulic damping cylinder 92 is mounted on carrier 68, and includes a cylinder rod 94 biased against or connected to the bottom plate 28 for accurately controlling the speed of the advancing movement of the carrier 68 and the spindle unit 20 caused by the pneumatic cylinder 88 towards a workpiece (not shown). The damping cylinder 92 includes adjustable valve means (not shown) for adjusting the speed of advancement of the spindle unit 20.

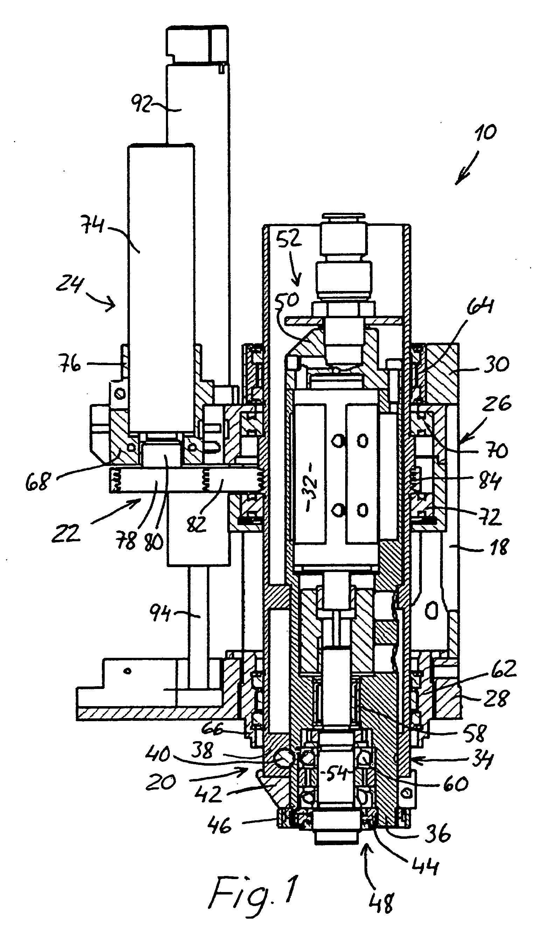

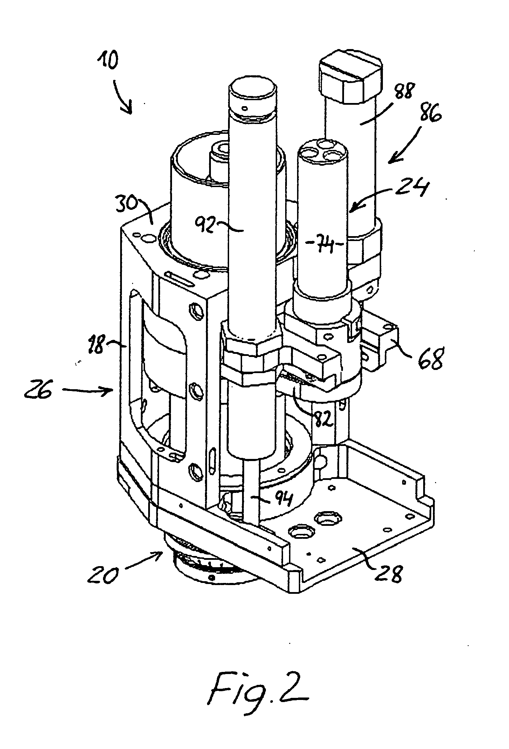

Figs. 1, 2 and 3 show the spindle unit 20 in its axially retracted position. The carrier 68 is near the top 30, with the cylinder rod 90 retracted within the axial adjustment cylinder 88. The cylinder rod 94 of the damping cylinder 90 is extended and engages the bottom plate 28.

To extend the spindle unit 20 forwardly in the pneumatic portable orbital drill 10 from the retracted position illustrated in Figs. 1-3, the cylinder rod 90 is extended from the axial adjustment cylinder 88 while simultaneously cylinder rod 94 is retracted into the damping cylinder 90 in a controlled manner. The carrier 68 is thereby advanced toward the bottom plate 28 and away from the top 30. An extended position of spindle unit 20 is illustrated in Figs. 4.

Since the spindle unit 20 and the orbital drive unit 24 are both mounted to the carrier 68, both are axially adjusted together, and the driving connection between the orbit motor 74 and the spindle unit 20 is maintained. Thus, the driving connection between the orbit motor 74 and the spindle unit 20 can be a fixed, stable connection, not requiring either or both to allow and compensate for movement by the other or both.

## Claims

1. A hand tool apparatus for using a cutting tool with a first width and a tool axis to machine a hole in an object, the hole to be formed by the cutting tool having a second width which is larger than the first width of the cutting tool, said apparatus comprising:
a housing (26); **characterised by**
a carrier (68) mounted to and axially moveable relative to the housing (26);
a spindle unit (20) having a principal axis and including a spindle motor (32), a spindle shaft (54) for rotating the cutting tool, and a radial offset mechanism (34) configured for adjusting a radial offset of the cutting tool axis relative to the principal axis, said spindle unit (20) being secured to said carrier (68) against axial movement while being rotational relative to said carrier (68) about said principal axis;
an orbital drive motor (74) mounted on said carrier (68) and drivingly connected to said spindle unit (20) for rotating said spindle unit about said principal axis relative to said carrier; and
an axial feed mechanism (86) secured to said housing (26) and said carrier (68) and configured for jointly advancing and withdrawing said spindle unit (20) together with said carrier (68) and said orbital drive motor (74) relative to the object.

2. The hand tool apparatus of claim 1, wherein said axial feed mechanism (86) comprises an axial adjustment cylinder (88) having a cylinder rod (90), said cylinder being secured to one of said housing (26) and said carrier (68), whereas said cylinder rod (90) being secured to the other of said housing and said carrier.

3. The hand tool apparatus of claim 2, wherein said axial adjustment cylinder (88) comprises a pneumatic cylinder.

4. The hand tool apparatus of claim 3, wherein an hydraulic damping cylinder (92) is secured to said carrier (68) and having a cylinder rod (94) biased against said housing (26).

5. The hand tool apparatus of claim 4, wherein the hydraulic damping cylinder (92) is configured for adjustably controlling the advancing speed of the carrier (68) caused by the pneumatic cylinder (88).

6. The hand tool apparatus of any one of claims 1-5, wherein the housing (26) comprises a top (30) and a bottom plate (28), said carrier (68) being axially movable between said top and bottom plate by the axial adjustment cylinder (88).

7. The hand tool apparatus of any one of claims 1-6, wherein said radial offset mechanism (34) includes an inner sleeve (36) and an outer sleeve (38), said inner and outer sleeves (36, 38) being rotational relative to each other by a set screw (40), said spindle motor (32) being secured in said inner sleeve (36), and said spindle shaft (54) being rotational in said inner sleeve (36).

8. The hand tool apparatus of claim 7, wherein said outer sleeve (38) is rotational in said top plate (30), said carrier (68) and said bottom plate (28) about said principal axis.

9. The hand tool apparatus of any one of claims 1-8, wherein said orbital drive motor (74) has a motor shaft (80) and a pulley (78) driven thereby, and a belt (82) drivingly connecting said pulley to said spindle unit.

## Patentansprüche

1. Handwerkzeugvorrichtung zur Verwendung eines Schneidewerkzeugs mit einer ersten Breite und einer Werkzeugachse um ein Loch aus einem Objekt herauszuarbeiten, wobei das mit dem Schneidwerkzeug zu formende Loch eine zweite Breite aufweist die größer ist als die erste Breite des Schneidwerkzeuges, die Vorrichtung umfasst:
ein Gehäuse (26), **gekennzeichnet durch**
einen Träger (68) angeordnet an und axial beweglich relativ zu dem Gehäuse (26);
eine Spindeleinheit (20) mit einer Hauptachse und umfassend einen Spindelmotor (32), eine Spindelwelle (54) zum Drehen des Schneidwerkzeuges, und einen radialen Korrekturmechanismus (34) ausgebildet zum Einstellen einer Radialkorrektur der Schneidewerkzeugachse relativ zu der Hauptachse, die Spindeleinheit (20) ist an dem Träger (68) gegen axiale Bewegung gesichert während sie relativ zu dem Träger (68) um die Hauptachse drehbar ist;
einen Orbitalantriebsmotor (74), der auf dem Träger (68) angeordnet ist und der antreibbar mit der Spindeleinheit (20) zum Drehen der Spindeleinheit um die Hauptachse relativ zu dem Träger verbunden ist; und
einen axialer Fördermechanismus (86), der an dem Gehäuse (26) und dem Träger (68) befestigt ist und der zum verbundenen Voranführen und Herausziehen der Spindeleinheit (20) gemeinsam mit dem Träger (68) und dem Orbitalantriebsmotor (74) relativ zu dem Objekt angeordnet ist.

2. Handwerkzeugvorrichtung nach Anspruch 1, bei der der axiale Fördermechanismus einen axialen Einstellzylinder (88) mit einer Zylinderstange (90) umfasst, wobei der Zylinder mit dem Gehäuse (26) oder dem Träger (68) verbunden ist, wohingegen die Zylinderstange (90) mit dem jeweils Anderen dem Gehäuse oder dem Träger verbunden ist.

3. Handwerkzeugvorrichtung nach Anspruch 2, bei der der axiale Einstellzylinder (88) einen Pneumatikzylinder umfasst.

4. Handwerkzeugvorrichtung nach Anspruch 3, bei der ein hydraulischer Dämpfungszylinder (92) an dem Träger (68) befestigt ist und eine Zylinderstange (94) aufweist, die von dem Gehäuse (26) beabstandet ist.

5. Handwerkzeugvorrichtung nach Anspruch 4, bei der der hydraulische Dämpfungszylinder ausgebildet ist, um einstellbar die von dem Pneumatikzylinder (88) verursachte Vorführgeschwindigkeit des Trägers (68) zu steuern.

6. Handwerkzeugvorrichtung nach einem der Ansprüche 1-5, bei der das Gehäuse (26) eine Deckplatte (30) und eine Bodenplatte (28) umfasst, wobei der Träger (68) mittels des axialen Einstellzylinders (88) axial zwischen der Deckplatte und der Bodenplatte beweglich ist.

7. Handwerkzeugvorrichtung nach einem der Ansprüche 1-6, bei der der radiale Korrekturmechanismus (34) eine innere Hülse (36) und eine äußere Hülse (38) umfasst, die inneren und äußere Hülse (36, 38) sind mittels einer Einstellschraube (40) relativ zueinander drehbar, wobei der Spindelmotor (32) an der inneren Hülse (36) befestigt ist und die Spindelwelle (54) in der inneren Hülse (36) drehbar ist.

8. Handwerkzeugvorrichtung nach Anspruch 7, bei der die äußere Hülse (38) in der Deckplatte (30), in dem Träger (68) und in der Bodenplatte (28) um eine Hauptachse drehbar ist.

9. Handwerkzeugvorrichtung nach einem der Ansprüche 1-8, bei der der Orbitalantriebsmotor (74) eine Motorwelle (80) und eine von ihr angetriebene Riemenscheibe (78) aufweist, und ein Riemen (82) antreibend die Riemenscheibe mit der Spindeleinheit verbindet.

## Revendications

1. Un appareil portatif pour utiliser un outil de découpage ayant un première largeur et un axe d'outil destiné à percer un orifice dans un objet, l'orifice devant être formé par l'outil de découpage ayant une seconde largeur supérieure à la première largeur de l'outil de découpage, ledit appareil comprenant :
un boîtier (26) ; **caractérisé par**
un support (68) monté sur le boîtier (26) et pouvant se déplacer axialement par rapport à celui-ci ;
une unité-broches (20) ayant un axe principal et comprenant un moteur à broches (32), un arbre à broche (54) destiné à faire pivoter l'outil de découpage, et un mécanisme de décalage radial (34) configuré pour ajuster un décalage radial de l'outil de découpage par rapport à l'axe principal, ladite unité-broches (20) étant fixée audit support (68) pour empêcher un mouvement axial tout en pouvant pivoter par rapport audit support (68) autour dudit axe principal ;
un moteur d'entrainement orbital (74) monté sur ledit support (68) et en liaison d'entrainement avec ladite unité-broches (20) pour faire pivoter ladite unité-broches autour dudit axe principal par rapport audit support ; et
un mécanisme d'alimentation axial (86) fixé audit boîtier (26) et audit support (68) et configuré pour faire conjointement avancer et rétracter ladite unité-broches (20) avec ledit support (68) et ledit moteur d'entrainement orbital (74) par rapport à l'objet.

2. L'appareil portatif de la revendication 1, ledit mécanisme d'alimentation axial (86) comprenant un cylindre d'ajustement axial (88) ayant une tige de cylindre (90), ledit cylindre étant fixé à l'un dudit boîtier (26) et dudit support (68), alors que ladite tige de cylindre (90) est fixée à l'autre dudit boîtier et dudit support.

3. L'appareil portatif de la revendication 2, ledit cylindre d'ajustement axial (88) comprenant un cylindre pneumatique.

4. L'appareil portatif de la revendication 3, un cylindre d'amortissement hydraulique (92) étant fixé audit support (68), et ayant une tige de cylindre (94) sollicitée contre ledit boîtier (26).

5. L'appareil portatif de la revendication 4, le cylindre d'amortissement hydraulique (92) étant configuré pour commander de façon ajustable la vitesse de l'avancée du support (68) provoquée par le cylindre pneumatique (88).

6. L'appareil portatif de l'une quelconque des revendications 1 à 5, le boîtier (26) comprenant une plaque supérieure (30) et une plaque inférieure (28), ledit support (68) pouvant être déplacé axialement entre lesdites plaques supérieure et inférieure par le cylindre d'ajustement axial (88).

7. L'appareil portatif de l'une quelconque des revendications 1 à 6, ledit mécanisme de décalage radial (34) comprenant un manchon interne (36) et un manchon externe (38), lesdits manchons interne et externe (36, 38) pouvant être mis en rotation l'un par rapport à l'autre au moyen d'une vis de pression (40), ledit moteur à broche (32) étant fixé dans ledit manchon interne (36), et ledit arbre à broche (54) pouvant pivoter dans ledit manchon interne (36).

8. L'appareil portatif de la revendication 7, ledit manchon externe (38) pouvant pivoter dans ladite plaque supérieure (30), ledit support (68) et ladite plaque inférieure (28) autour dudit axe principal.

9. L'appareil portatif de l'une quelconque des revendications 1 à 8, ledit moteur d'entrainement orbital (74) ayant un arbre de moteur (80) et une poulie (78) entrainée par celui-ci, ainsi qu'une courroie (82) créant une liaison d'entrainement entre ladite poulie et ladite unité-broche.
